# EUROPEAN PATENT APPLICATION

(11) **EP 0 527 593 A2**
(43) Date of publication of application: **17.02.1993**
(21) Application number: 92307179.9
(22) Date of filing: 05.08.1992
(51) Int. Cl.: H02K 41/03, H02K 19/10, H02K 37/02

(54) **Direct vane actuator drive**

(30) Priority: 08.08.1991 US 741924
(71) Applicant: GENERAL ELECTRIC COMPANY, Schenectady, NY 12345 (US)
(72) Inventor: Chung, Kiyoung, West Chester, Ohio 45069 (US); Richter, Eike, Cincinnati, Ohio 45249 (US)
(74) Representative: Pratt, Richard Wilson

(57) **Abstract**

The present invention provides an electric actuator motor (5) for controlling multiple linkages. The invention comprises a housing, a plurality of stator portions (14,15,16) within the housing wherein each of the stator portions (14,15,16) comprises laminated magnetic sections includes a plurality of stator poles. The invention further comprises a plurality of rotors (11,12) movable between the stator portions (14,15,16) wherein each rotor includes a plurality of rotor poles (21) comprising magnetic laminated portions positionable between nonmagnetic spacers (26) of the rotor. Electromagnetic means for moving the rotors (11,12) between the stator portions (14,15,16) are also included. The invention further comprises bearings (5') for guiding the rotors (11,12) as they traverse between the stator portions (14,15,16). The rotors (11,12) include posts (19,20) that are used for mounting the rotors (11,12) on a support ring (13).

## Description

### Field of the Invention

The present invention relates in general, to electrical actuator drives and more particularly, to an axial flux type switched reluctance (SR) motor for controlling a plurality of linkages arranged in a circle.

### Background of the Invention

Electrical actuator drives may be used for controlling a plurality of linkages. One example of this application is a vane actuator for an aircraft engine. Vane actuators comprising hydraulic drivers may require multiple levers to translate straight motion into circular motion. The vanes located around the engine may be connected to a ring which is adapted to drive all the vanes in parallel in response to forces exerted by the vane actuators.

The use of multiple levers for translating straight motion to circular motion may add complexity and weight to the actuator system. The weight and complexity of the actuator system may be further increased where multicontrol system are used for controlling specific sectors of the vane assembly. Consequently, a different ring for each sector may be necessary for multicontrol systems that are used in the aforementioned application and thus, the weight and complexity of the actuator system may increase. In addition, since the vane actuator may not be integrated with the drive ring, the assembly time and maintenance effort may be substantial. Thus, it would be advantageous to eliminate the rings and their associated linkages.

### Summary of Invention

The present invention provides an electric actuator motor for controlling multiple linkages. The invention comprises a housing, a plurality of stator portions within the housing wherein each of the stator portions comprises laminated magnetic sections includes a plurality of stator poles. The invention further comprises a plurality of rotors movable between the stator portions wherein each rotor includes a plurality of rotor poles comprising magnetic laminated portions positionable between nonmagnetic spacers of the rotor. Electromagnetic means for moving the rotors between the stator portions are also included. The invention further comprises bearings for guiding the rotors as they traverse between the stator portions. The rotors include posts that are used for mounting the rotors on a support ring.

### Brief Description of the Drawings

The novel features of the invention are set forth with particularity in the appended claims. The invention itself, however, both as to organization and method of operation, together with further objects and advantages thereof, may best be understood by reference to the following description taken in conjunction with the accompanying drawings in which:

FIG. 1 is a perspective view of an embodiment of the electric actuator motor according to the present invention.

FIG. 2 is cross section view of an embodiment of the electric actuator motor according to the present invention.

FIG. 3 is a top view of an embodiment of the guiding means for the electric actuator motor according to the present invention.

FIG. 4 is a side view of a further embodiment of the guiding means for the electric actuator motor according to the present invention.

FIG. 5 is a side view of an embodiment of the electric actuator motor according to the present invention.

FIG. 6 is cross section view of an embodiment of the electric motor according to the present invention.

FIG. 7 is cross section view of a further embodiment of the electric motor according to the present invention.

### Detailed Description of the Invention

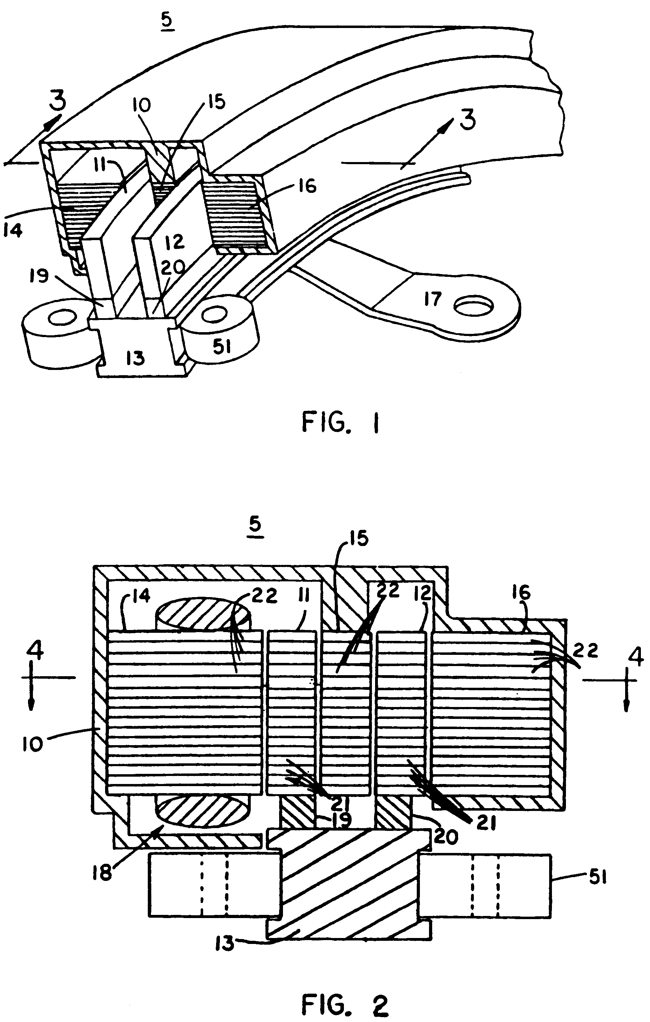

Figure 1 illustrates a perspective view of an embodiment of the electric actuator motor according to the present invention. In general, circular electric actuator motor 5 is attached to a stationary structure (not shown), for example, an aircraft engine frame. Motor 5 comprises a plurality of laminated stator portions 14, 15 and 16 constructed of, for example, combinations of cobalt and iron, attached to a stationary structure. Motor 5 further comprises rotors 11 and 12 having magnetic laminated poles 21 positionable between nonmagnetic spacers 26 and movable within stator portions 14,15 and 16. Magnetic laminated poles 21 may comprise combinations of cobalt and iron while nonmagnetic spacers 26 may comprise nonmagnetic, nonconductive materials, for example composites or any other suitable material. Rotors 11 and 12 are mounted on support ring 13. A plurality of levers, exemplified by lever 17, in Figure 1, are an integral part of support ring 13 and may be attached to, for example, individual vanes. Rotors 11 and 12 move according to electromagnetic means, for example, coils (not shown) having an electric current passing therethrough. Motor 5 further comprises means for guiding rotors 11 and 12 (for example, bearings 51) as they traverse between stator portions 14,15 and 16. The motion of rotors 11 and 12 moves levers 17 which control the motion of the vanes. It would be obvious to those skilled in the art that motor 5 may be fully circular. In a circular motor, stator portion 14 may be fully circular and rotors 11 and 12 may be either fully circular or sectored.

Figure 2 illustrates a cross sectional view of an embodiment of the electric actuator motor according to the present invention. In this embodiment, electric motor 5 comprises a housing 10, and a plurality of laminated stator portions 14,15 and 16 within housing 10 wherein each stator portion 14,15 and 16 includes a plurality of stator poles. Motor 5 further comprises a plurality of rotors 11 and 12 having magnetic laminated poles 21 positionable between nonmagnetic spacers 26 and movable within stator portions 14,15 and 16. Magnetic laminated poles 21 may comprise combinations of cobalt and iron while nonmagnetic spacers 26 may comprise nonmagnetic, nonconductive materials, for example composites or any other suitable material. Electromagnetic means, for example coils 18 having electric current passing therethrough, for moving rotors 11 and 12 between stator portions 14,15 and 16 are also included. Rotors 11 and 12 include mounting means, for example, posts 19 and 20, for mounting rotors 11 and 12 on support ring 13.

Motor 5 further comprises means 51 for guiding rotors 11 and 12 as they traverse between stator portions 14,15 and 16. Bearings 51 or other conventional aligning or guiding means, for example, lubricated sliding surfaces, rotating element bearings or linear bearing arrangements may be used to guide rotors 11 and 12 as they traverse between stator portions 14,15 and 16. Magnetic laminated poles 21 included in rotors 11 and 12 and magnetic laminated poles 22 included in stator portions 14,15 and 16 are oriented such that the magnetic flux has an unrestricted flowpath between magnetic laminated poles 21 and 22. Coils 18 may comprise copper, the preferred material, or aluminum with cladding if necessary. electrical coil insulation may comprise materials commonly used in transformers or electrical machines.

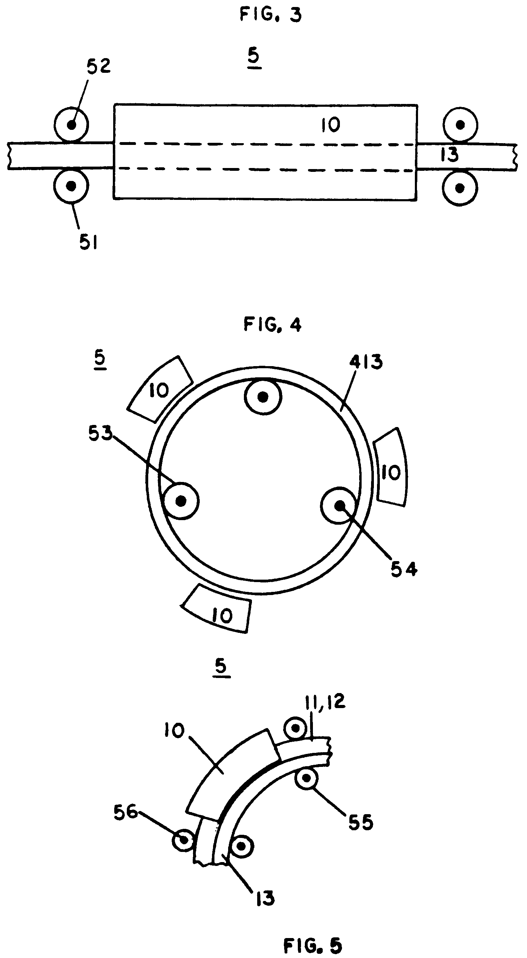

Figure 3 illustrates an embodiment of guiding means 51 being used for securing the support ring 13 in the axial direction according to the present invention. Guiding means 51 may comprise a plurality of bearings 51 herein shown as four bearings 51. Bearings 51 may be rolling element type bearings. A pair of bearings 51 may, for example, be mounted on opposites sides of support ring 13 at one end of motor 5 while another pair of bearings 51 may be mounted on opposites sides support ring 13 at the other end of motor 5. Each inner portion of bearings 51 may be mounted on a plurality of fixed shafts 52 wherein each fixed shaft 52 corresponds to a bearing 51. The outer portion on bearings 51 rotates and rolls on support ring 13. Additional bearings may be required according to the application of motor 5.

Figures 4 and 5 further illustrate the guiding means being used for securing rotors' 11 and 12 position in the radial direction according to the present invention. For fully circular support ring 413, Fig. 4, the guiding means may comprise a plurality of rolling element type bearings 53 equally distributed along the inner circumference of support ring 413. Each inner portion of bearings 53 may be mounted on a plurality of fixed shafts 54 wherein each fixed shaft 54 corresponds to a bearing 53. The outer portion on bearings 53 rotates and rolls on inner circumference of support ring 413. In this embodiment, a minimum of three bearings may be used. For sectored support ring 13, Fig. 5, the guiding means comprise at least four bearings 55. A first pair of bearings 55 may be located at one end of motor 5 wherein one bearing 55 may be positioned on outer surface of rotors 11 and 12 while the other bearing 55 may be positioned on inner surface of support ring 13. A second pair of bearings 55 may be located at the other end of motor 5 and configured in like manner to that of the first pair of bearings 55. Each inner portion of bearings 55 may be mounted on a plurality of fixed shafts 56 wherein each fixed shaft 56 corresponds to a bearing 55. The outer portion on bearings 55 rotates and rolls on support ring 13 and rotors 11 and 12. It would be obvious to those skilled in the art that guiding means for rotors 11 and 12 may comprise lubricated siding surfaces, rotating element bearings or linear bearing arrangements.

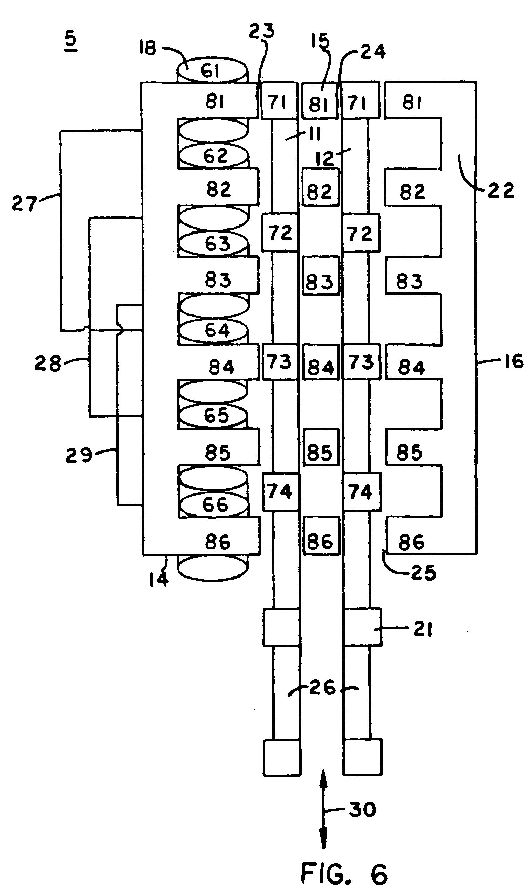

Figure 6 illustrates a motor according to the present invention. Stator portions 14,15 and 16 comprise first stator portion 14 including a plurality of first stator poles 23, second stator portion 15 including a plurality of second stator teeth 24, and third stator portion 16 including a plurality of third stator poles 25. Magnetic laminated poles 21 on rotors 11 and 12 respectively, may be equally spaced between nonmagnetic spacers 26. Electromagnetic coils 18 comprise a plurality of series connected coils 61-66. Each series connected coil 61-66 comprises one phase 27,28 or 29 of the multiple phase motor winding. Each phase winding 27,28 and 29 is connected to its corresponding power amplification means (not shown) which supply electrical current to phase winding 27,28 and 29. Phase winding 27 comprises coils 61 and 64 which are connected in series. Phase winding 28 comprises coils 62 and 65 which are connected in series. Phase winding 29 comprises coils 63 and 66 which are connected in series. Phase windings 27,28 and 29 generate a magnetic field according to the amplitude of the current passing therethrough. The generated magnetic field creates a magnetic force which moves rotors 11 and 12 in the direction shown by arrow 30 according to the sequence in which the current to phase windings 27,28 and 29 is turned on and off.

In this embodiment, coils 61-66 may be attached to first stator portion 14 wherein each coil 61-66 is associated with one first stator pole 23. In the embodiment of Figure 6, rotor poles 71 form a reduced reluctance path between stator poles 81 when they are aligned with those stator poles. The rotor poles are positioned such that when the first set of rotor poles 71 is aligned with stator poles 81, the second set of rotor poles 72 is misaligned from stator poles 82 and 83 the third set of rotor poles 73 is aligned with its corresponding stator poles 84.

Rotors 11 and 12 move according to the magnetic force between stator poles 23. The magnetic force is created by the current which passes through the phase windings 27,28 and 29. Referring to figure 6 for example, to move rotors 11 and 12 downward, phase winding 29 may be activated. The magnetic force created by phase winding 29 attracts rotor poles 72 to stator poles 83 and rotor poles 74 to stator poles 86. To move rotors 11 and 12 upward from the downward position previously described, phase winding 27 may be activated and phase winding 29 deactivated. The magnetic force created by phase winding 27 attracts rotor poles 71 to stator poles 81 and rotor poles 73 to stator poles 84. To move rotors 11 and 12 further in the same direction, phase winding 28 may be activated and phase winding 27 deactivated. In this case, the magnetic force created by phase winding 28 attracts rotor poles 72 to stator poles 82 and rotor poles 74 to stator poles 85. Consequently, the movement of rotors 11 and 12 is governed by the sequence in which phase windings 27,28 and 28 are turned on and off. It should be noted that should one phase winding 27,28 or 29 fail, motor 5 may still operate even though there may be a loss of magnetic force and acceleration.

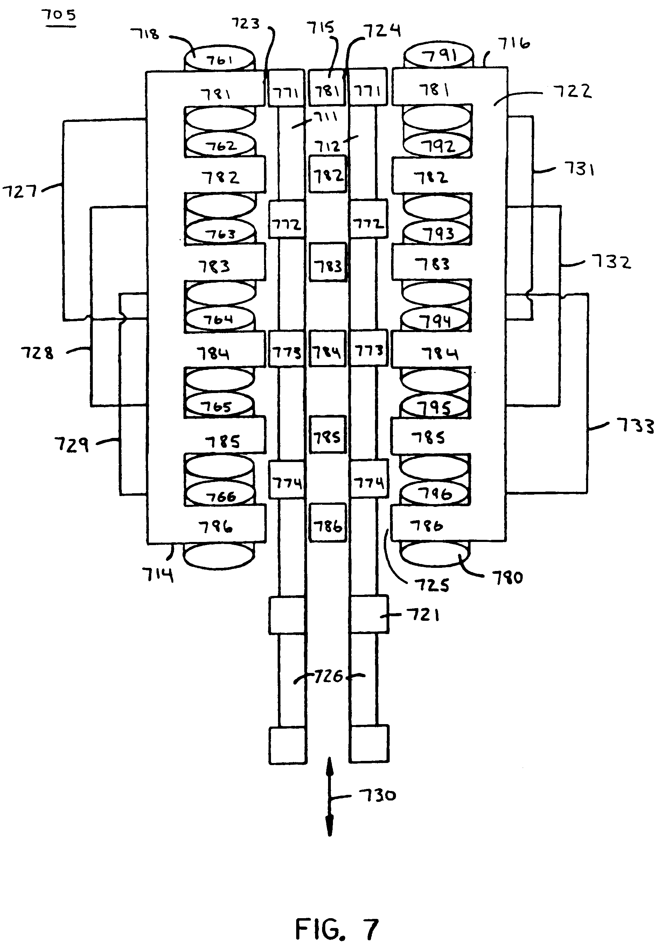

It would be obvious to those skilled in the art that more phase windings may be added to motor 5 to improve the control of rotors' 11 and 12 movements. Phase windings may be added on third stator portion 16 wherein each added coil is associated with one third stator pole 25 and each phase winding is connected to its corresponding power amplifier means as shown in Figure 7.

Figure 7 illustrates a further embodiment of a motor according to the present invention. Stator portions 714,715 and 716 comprise first stator portion 714 including a plurality of first stator poles 723, second stator portion 715 including a plurality of second stator teeth 724, and third stator portion 716 including a plurality of third stator poles 725. Magnetic laminated poles 721 on rotors 711 and 712 respectively, may be equally spaced between nonmagnetic spacers 726. Electromagnetic coils 718 and 780 comprise a plurality of series connected coils 761-766 and coils 791-796 respectively. Each series connected coil 761-766 and 791-796 comprises one phase 727, 728, 729, 731, 732 and 733 of the multiple phase motor winding. Each phase winding 727,728,729,731,732 and 733 is connected to its corresponding power amplification means (not shown) which supply electrical current to phase windings 727, 728, 729, 731, 732 and 733. Phase winding 727 comprises coils 761 and 764 which are connected in series. Phase winding 728 comprises coils 762 and 765 which are connected in series. Phase winding 729 comprises coils 763 and 766 which are connected in series. Phase winding 731 comprises coils 791 and 790 which are connected in series. Phase winding 732 comprises coils 792 and 795 which are connected in series. Phase winding 733 comprises coils 793 and 796 which are connected in series. Phase windings 727, 728, 729, 731, 732 and 733 generate a magnetic field according to the amplitude of the current passing therethrough. The generated magnetic field createe a magnetic force which moves rotors 711 and 712 in the direction shown by arrow 730 according to the sequence in which the current to phase windings 727, 728, 729, 731, 732 and 733 is turned on and off.

In the embodiment of Figure 7, rotors 711 and 712 move according to the magnetic force between stator poles 723 and 725. The magnetic force is created by the current which passes through the phase windings 727,728,729,731,732 and 733. To move rotors 711 and 712 downward, phase windings 729 and 733 may be activated. The magnetic force created by phase windings 729 and 733 attracts rotor poles 772 to stator poles 783 and rotor poles 774 to stator poles 786. To move rotors 711 and 712 upward from the downward position previously described, phase windings 727 and 731 may be activated and phase windings 729 and 733 deactivated. The magnetic force created by phase windings 727 and 731 attracts rotor poles 771 to stator poles 781 and rotor poles 773 to stator poles 784. To move rotors 711 and 712 further in the same direction, phase windings 728 and 732 may be activated and phase windings 727 and 731 deactivated. In this case, the magnetic force created by phase windings 728 and 732 attracts rotor poles 772 to stator poles 782 and rotor poles 774 to stator poles 785. Consequently, the movement of rotors 711 and 712 is governed by the sequence in which phase windings 727, 728, 728, 731, 732 and 733 are turned on and off. Additional phase windings may also be added to stator portions 14 and 16. This may be accomplished by adding first, second and third stator poles and coils wherein each coil being associated with one of additional first and third stator poles and each phase winding being connected to a corresponding power amplifier means. Additional rotors may also be added as deemed necessary.

In the embodiment of figure 2, housing 10, mounting means 19,20, and support ring 13 may comprise nonmagnetic materials such as stainless steel, titanium, composites (CC), ti-aluminides or other suitable nonmagnetic structural materials. Horizontal orientation is preferred for all the laminations of magnetic laminated poles in the present invention. Magnetic laminated poles may comprise thin magnetic steel laminations comprising combinations of cobalt and iron. In referring to Figures 6 and 7, nonmagnetic spacers 26 and 729 may comprise nonmagnetic, nonconductive materials, for example, composites or any other suitable nonmagnetic, nonconducting materials. Coils 18 and 780 may comprise copper, the preferred material, or aluminum with cladding if necessary. Electrical coil insulation may comprise materials commonly used in transformers or electrical machines.

The present invention provides a much simpler actuator than conventional hydraulic actuators. Its advantages include weight savings, simplicity in assembly and disassembly, and superior controllability of multiple linkages in a circle. In addition, triple redundancy may be readily incorporated in the actuator system and is supported by the failure tolerant SR machine technology. It would be obvious to those skilled in the art that the support ring may be a vane ring. Furthermore, it would be obvious to those skilled in the art that the support ring and the rotors may be an integral part. Furthermore, it would be obvious to those skilled in the art that permanent magnets may be substituted for the magnetic laminated poles.

While preferred embodiments of the present invention have been shown and described herein, it will be obvious to those skilled in the art that such embodiments are provided by way of example only. Numerous variations, changes, and substitutions will now occur to those skilled in the art without departing from the invention. Accordingly, it is intended that the invention be limited only by the spirit and scope of the appended claims.

## Claims

1. An electric actuator motor comprising:
a housing;
a plurality of stator portions adapted within said housing wherein each of said stator portions includes a plurality stator poles;
a plurality of rotors movable between said stator portions; and
electromagnetic means for moving said rotors between said stator portions.

2. An electric actuator motor according to claim 1 and further comprising means for guiding said rotors as said rotors traverse between said stator portions.

3. An electric actuator motor according to claim 2 wherein said stator portions include first magnetic laminated portions.

4. An electric actuator motor according to claim 3 wherein said rotors include a plurality of rotor poles having second magnetic laminated portions spaced between nonmagnetic spacers.

5. An electric actuator motor according to claim 4 wherein said rotor poles being equally spaced along the circumferential direction of said rotors.

6. An electric actuator motor according to claim 5 wherein said stator portions comprises first stator portion including a plurality of first stator poles, second stator portion including a plurality of second stator poles, and third stator portion including a plurality of third stator poles.

7. An electric actuator motor according to claim 6 wherein said electromagnetic means for moving said rotors comprises a plurality of phase windlngs, said phase windings being connected to a plurality of power amplifier means corresponding to each of said phase windings, said phase windings generating a magnetic field according to the amplitude of the current passing therethrough, said magnetic field creating a magnetic force for moving said rotors.

8. An electric actuator motor according to claim 7 wherein said phase windings comprise:
a plurality of coils attached to said first stator portion wherein each of said coils being associated with one of said first stator poles, two or more of said coils being connected in series, said series connections between two or more of said coils being determined according to the location at which said rotor poles are aligned with said stator poles such that a reduced reluctance path is created; and
means for electrically connecting said coils in each said phase winding to its corresponding said power amplifier means.

9. An electric actuator motor according to claim 8 wherein said guiding means for said rotors as said rotors traverse between said stator portions comprises bearings.

10. An electric actuator motor according to claim 9 wherein said rotors include means for mounting said rotors on a support ring.

11. An electric actuator motor according to claim 10 wherein said first and second magnetic laminated sections being horizontally oriented.

12. An electric actuator motor according to claim 11 wherein:
said housing comprises nonmagnetic structural material;
said stator portions including a circular cross section;
said rotors including a circular cross section;
said mounting means comprises posts for each said rotor; and
said support ring including a circular cross section;
said nonmagnetic spacers comprise nonmagnetic, nonconductive materials;
said support ring comprises nonmagnetic structural material;
said posts comprise nonmagnetic structural material;
said coils comprise copper; and
said magnetic laminated portions comprise combinations of cobalt and iron.

13. An electric actuator motor according to claim 11 or 12 wherein said phase windings further comprises:
a plurality of coils attached to said third stator portion wherein each of said coils being associated with one of said third stator poles, two or more of
said coils being connected in series, said series connections between two or more of said coils being determined according to the location at which said rotor poles are aligned with said stator poles such that a reduced reluctance path is created; and
means for electrically connecting said coils in each said phase winding to corresponding said power amplifier means.
